# EUROPÄISCHE PATENTSCHRIFT

(11) **EP 0 863 454 B1**
(45) Veröffentlichungstag und Bekanntmachung des Hinweises auf die Patenterteilung: **19.03.2003**
(21) Anmeldenummer: 97110264.5
(22) Anmeldetag: 24.06.1997
(51) Int. Cl.: G06F 1/16

(54) **Tragbarer Computer**
Portable computer
Ordinateur portable

(30) Priorität: 07.03.1997 CH 54797
(43) Veröffentlichungstag der Anmeldung: 09.09.1998
(73) Patentinhaber: Latschbacher GmbH, 4484 Kronstorf (AT)
(72) Erfinder: Latschbacher, Klaus, 4484 Kronstorf (AT)
(74) Vertreter: Vetter, Hans, Dipl.-Phys. Dr.

(56) Entgegenhaltungen:
- EP-A- 0 204 008
- DE-U- 29 707 388
- US-A- 5 347 477
- US-A- 5 375 076
- US-A- 5 583 742
- "DOOR FOR HAND-HELD COMPUTER" 1.April 1994 , IBM TECHNICAL DISCLOSURE BULLETIN, VOL. 37, NR. 4B, PAGE(S) 649/650 XP000451387 * das ganze Dokument *

## Beschreibung

Die Erfindung betrifft einen tragbaren Computer mit einem ein Display und eine Bedienungstastatur aufweisenden, wassergeschützten oder wasserdichten Gehäuse, das eine zentrale Prozessoreinrichtung (CPU), wenigstens einen Daten- und Programmspeicher und eine Versorgungsbatterie enthält.

Derartige tragbare Computer sind beispielsweise aus der EP-B-204 008, der DE-A-411 4448 oder der DE-A-411 4450 bekannt und werden vor allem im Außenbereich und Gelände zur Datenerfassung eingesetzt, beispielsweise zur Erfassung von Holzbeständen in der Forstwirtschaft, zur Erfassung des Nachfüllbedarfs von Zigarettenautomaten, zur Erfassung von Bußgeldern für falsches Parken und dergleichen. Es sind jedoch auch Anwendungen im Innenbereich möglich, z.B. die Erfassung von aus einem Menü ausgewählten Essenswünschen in Krankenhäusern oder die Qualitätserfassung und die Mängelerfassung von Produkten in Produktionsstraßen bei der Qualitätsüberwachung. Insbesondere im Hinblick auf die oft rauhen Verhältnisse im Außenbereich oder in Produktionsstätten müssen solche tragbaren Computer stoß- und wassergeschützt bzw. wasserdicht sein, um Beeinträchtigungen der empfindlichen Elektronik durch äußere Einflüsse zu verhindern. Durch die unterschiedlichen Anwendungen müssen diese Computer entsprechend unterschiedlich programmiert und hardwaremäßig unterschiedlich ausgerüstet werden. So benötigt die eine oder andere Anwendung einen mehr oder weniger großen Arbeitsspeicher und/oder Programmspeicher, und für die Datenausgabe sind unterschiedliche Einrichtungen erforderlich, wie Modems, Funkübertragungseinrichtungen für Daten, Datenwandler und dergleichen. Die bekannten Computer mußten entsprechend den unterschiedlichen Anforderungen unterschiedlich ausgerüstet und programmiert werden, was vor allem bei kleinen Serien einen verhältnismäßig großen Arbeits- und Kostenaufwand mit sich brachte.

US 5 583 742 A (NODA HIDEAKI ET AL) 10.Dezember 1996 zeigt einen wasserdichten Computer allerdings erwähnt das Dokument nicht die Verwendung von Funktionsmodulen sondern die Ausbildung von wasserdichten Kabelanschlußdosen zur Verbindung mit externen Geräten.

US 5 347 477 A (LEE JACK) 13.September 1994 zeigt einen tragbaren Computer bei dem IC-cards angeschlossen werden können. Diese IC-cards werden seitlich in den Computer gesteckt, und ragen aus dem nicht wasserdichten Gehäuse heraus.

Eine Aufgabe der vorliegenden Erfindung besteht daher darin, die bekannten tragbaren Computer so auszugestalten, daß sie an unterschiedliche Erfordernisse schnell und einfach soft- und hardwaremäßig angepaßt werden können, wobei das Gehäuse weiterhin wassergeschützt bzw. wasserdicht ausgebildet sein muß.

Diese Aufgabe wird erfindungsgemäß dadurch gelöst, daß wenigstens ein Steckplatz für von außen durch wenigstens eine Öffnung in das Gehäuse einsteckbare Funktionsmodule und ein die Öffnung dichtend verschließender Deckel vorgesehen sind, wobei der wenigstens eine Steckplatz zum Anschluß des jeweils eingesteckten Funktionsmoduls an die zentrale Prozessoreinrichtung mit dieser elektrisch verbunden ist.

Ein erfindungsgemäß so ausgebildeter Computer hat den Vorteil, daß in die Steckplätze wahlweise erforderliche Funktionsmodule entsprechend den jeweiligen Bedürfnissen einsteckbar sind, um zusätzlichen Programmspeicherplatz, Arbeitsspeicherplatz, einen zusätzlichen Wandler, ein Funkübertragungssystem, ein Modem, Netzwerkmodule und dergleichen zu realisieren. Auch die Programmierung für die verschiedenen Anwendungen kann dadurch erfolgen, daß entsprechende Programmspeichermodule jeweils eingesteckt bzw. umgesteckt werden. Dabei kann ein Grundprogramm in einem fest im Gehäuse angeordneten Programmspeicher enthalten sein, und ein zusätzlicher einsteckbarer Programmspeicher bewirkt die Anpassung des Programms an die jeweiligen Anforderungen und Bedürfnisse. Durch den Deckel kann nach dem Ein- und Umstecken die entsprechende Gehäuseöffnung wieder dichtend verschlossen werden, um auch den Anforderungen eines rauhen Betriebs im Außenbereich oder in Produktionswerkstätten Genüge zu tun. Durch den Deckel ist daher ein schnelles Auswechseln von Funktionsmodulen und damit eine schnelle Umrüstung gewährleistet.

Durch die in den Unteransprüchen aufgeführten Maßnahmen sind vorteilhafte Weiterbildungen und Verbesserungen des im Anspruch 1 angegebenen Computers möglich.

In einer bevorzugten konstruktiven Ausgestaltung sind die Funktionsmodule als Steckkarten und der wenigstens eine Steckplatz als entsprechender Steckschlitz ausgebildet. Dabei können in einer Öffnung auch mehrere Steckplätze vorgesehen sein, und das Gehäuse kann auch mehrere solche Öffnungen besitzen.

Da solche Steckmodule sehr unterschiedlich ausgebildet sein können und einen unterschiedlichen Platzbedarf aufweisen, können auch einen Steckplatz belegende Funktionsmodule und auch zwei Steckplätze belegende Funktionsmodule vorgesehen sein.

Das Gehäuse ist zweckmäßigerweise als Flachgehäuse ausgebildet, und die wenigstens eine Öffnung ist vorzugsweise an einer Schmalseite oder einem Kantenbereich einer Schmalseite des Gehäuses angeordnet, damit die Funktionsmodule von der Schmalseite her in das Gehäuse eingesteckt werden können.

In einer bevorzugten Ausführung ist der Deckel mittels eines Scharniers schwenkbar am Gehäuse angeordnet und vorzugsweise über das Scharnier mit einem in eine Halteausnehmung des Gehäuses einsteckbaren oder verrastbaren Haltebereich verbunden. Der Deckel, das als Filmscharnier ausgebildete Scharnier und der Halteberereich sind dabei insbesondere einstückig ausgebildet.

Zum dichtenden Verschließen des Deckels ist in einer bevorzugten Ausführung ein diesen Deckel in der dichtenden Schließstellung haltender Schließschieber vorgesehen. Dieser ist zweckmäßigerweise in einer Führungsausnehmung des Gehäuses geführt und übergreift in der Schließstellung den Deckel wenigstens teilweise, wobei er ihn dichtend an das Gehäuse anpreßt. Hierdurch ist ein besonders schnelles öffnen und dichtendes Verschließen möglich.

In einer bevorzugten konstruktiven Ausgestaltung weisen der Deckel und der Schließschieber jeweils einen im wesentlichen L-förmigen Querschnitt auf und übergreifen zusammen einen Schmalseitenbereich des Gehäuses, wobei sie sich noch in die angrenzenden Flachseitenbereiche des Gehäuses erstrecken. Dabei sind der Deckel und der Schließschieber so versenkt angeordnet, daß sie zusammen mit den angrenzenden Gehäusewandungen eine kontinuierliche Außenfläche bilden, um Schmutzablagerungen, Beschädigungen und unbeabsichtigte öffnungsbewegungen zu verhindern.

Die Bedienungstastatur und das Display sind zweckmäßigerweise an einer der Flachseiten des Gehäuses angeordnet, wobei die Tastatur zweckmäßigerweise Berührungstasten aufweist, um Abdichtprobleme zu vermeiden.

Das Gehäuse besteht vorzugsweise aus zwei zusammenschraubbaren Gehäuseteilen, die ebenfalls die Erzielung einer guten Dichtigkeit fördern.

Ein Ausführungsbeispiel der Erfindung ist in der Zeichnung dargestellt und in der nachfolgenden Beschreibung näher erläutert. Es zeigen:
- Fig. 1: eine Querschnittsdarstellung des tragbaren Computers gemäß der Schnittlinie A-A in Fig. 2 als Ausführungsbeispiel der Erfindung,
- Fig. 2: den in Fig. 1 dargestellten Computer in einer Ansicht auf die untere Flachseite und
- Fig. 3: eine entsprechende Ansicht der oberen Flachseite des Computers.

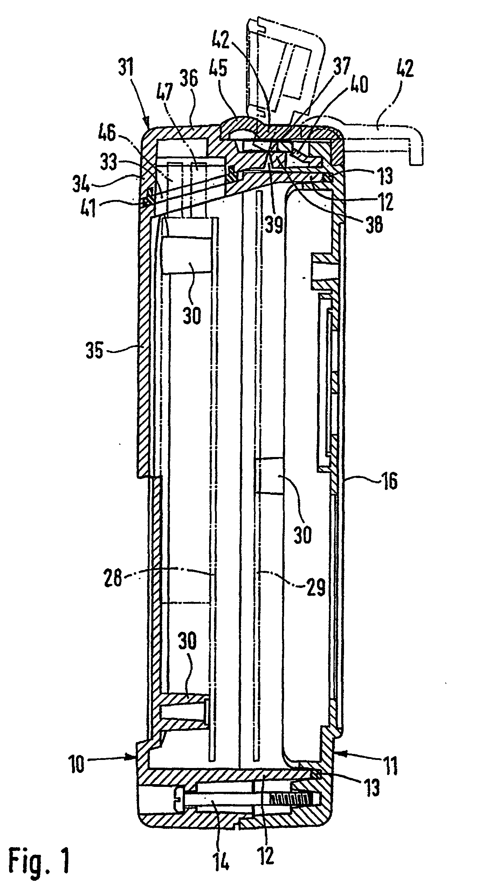

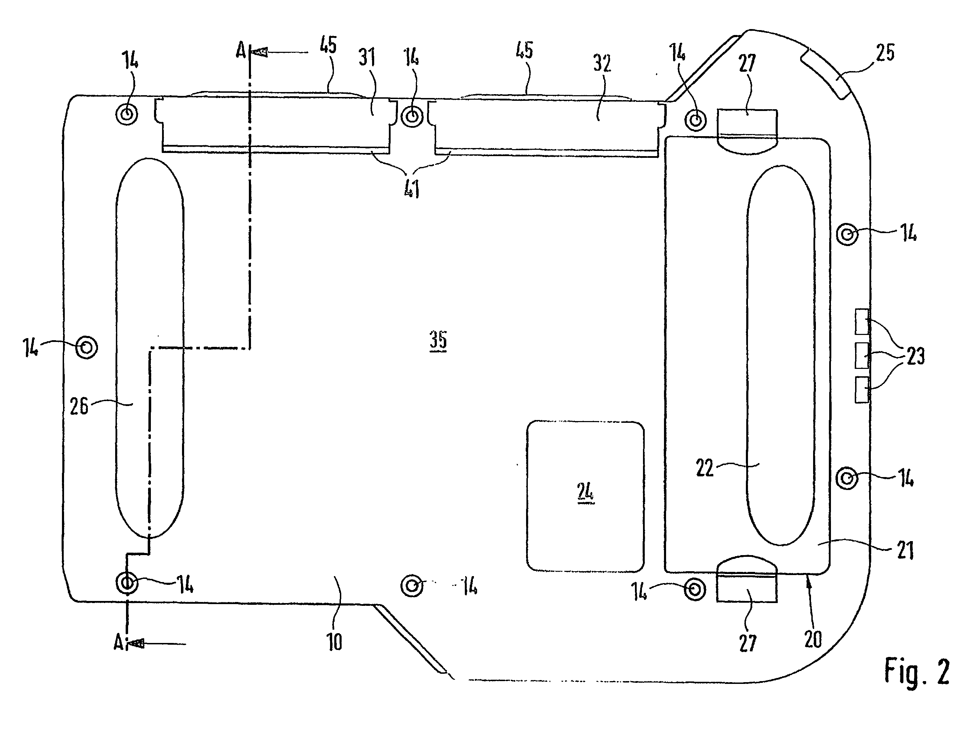

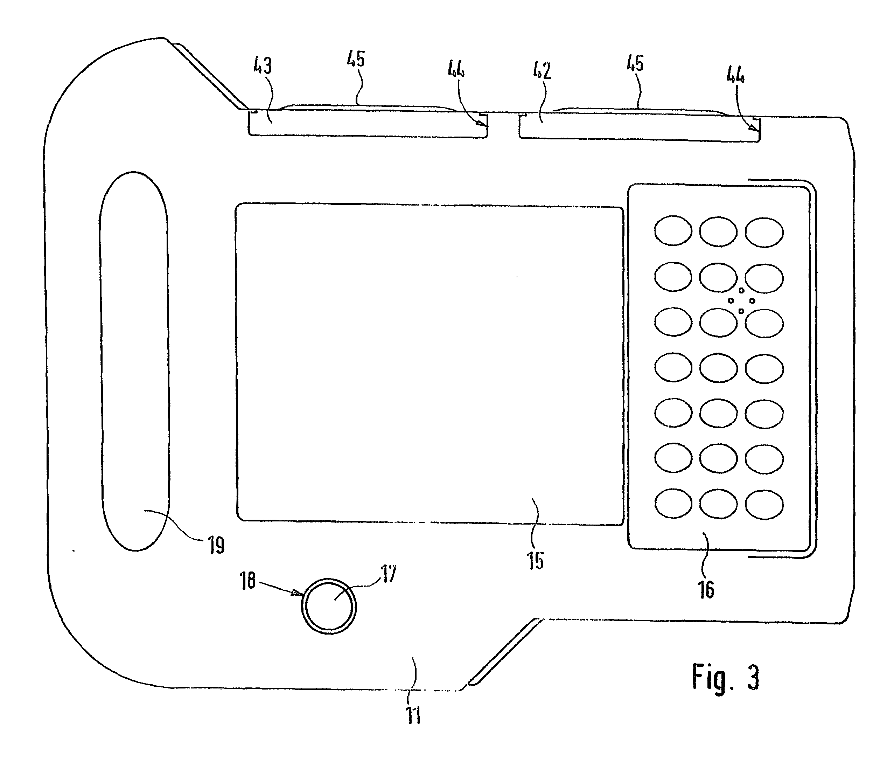

Der in den Fig. 1 bis 3 dargestellte tragbare Computer besitzt ein Gehäuse, das aus zwei Gehäusehälften 10, 11 besteht. Zur randseitigen Abdichtung greift eine umlaufende vorspringende Wandung 12 der unteren Gehäusehälfte 10 in eine entsprechende Ringnut der anderen Gehäusehälfte 11 ein und drückt dabei dichtend gegen eine darin angeordnete Dichtung 13. Außerhalb dieser Wandung 12 sind die beiden Gehäusehälften 10, 11 mittels Halteschrauben 14 miteinander verschraubt.

An der oberen Gehäusehälfte 11 sind ein LCD-Display 15 und eine Berührungstasten aufweisende Tastatur 16 dichtend angeordnet. Hierbei kann es sich um Ausführungen gemäß dem eingangs angegebenen Stand der Technik handeln. Die Flachseite der oberen Gehäusehälfte 11 besitzt weiterhin einen mit einem Deckel 17 dichtend verschlossenen Steckeranschluß 18, beispielsweise für einen fünfpoligen Stecker, der zur Datenübertragung, Programmierung, als Schnittstelle und dergleichen dienen kann. Weiterhin ist an der oberen Gehäusehälfte 11 eine vorspringende Griffleiste 19 angeordnet, die zur besseren Handhabung des Gehäuses dient. Diese Griffleiste 19 kann beispielsweise aufgeklebt, einstückig angeformt oder in eine Aufnahmevertiefung eingesetzt sein.

Die untere Gehäusehälfte 10 besitzt an ihrer Flachseite eine Ausnehmung 20 zur Aufnahme einer aufladbaren oder nicht aufladbaren Batterie (Akku) zur Stromversorgung des Computers, wobei diese Ausnehmung 20 dichtend durch einen Deckel 21 verschlossen ist, der ebenfalls mit einer Griffleiste 22 versehen ist. Zur Verriegelung des Deckels 21 dienen Verriegelungen 27. Zur Aufladung des Akkus dienen randseitige Ladekontakte 23. Zur Datenübertragung ist ein Infrarotfenster 24 vorgesehen, so daß der Computer zur drahtlosen Datenübertragung lediglich auf eine Übertragungseinrichtung aufgelegt werden muß, die mit einem entsprechenden Infrarotfenster versehen ist. Ein weiteres Infrarotfenster 25 zur Datenübertragung ist auch noch an einem randseitigen Bereich der Schmalseite dieser unteren Gehäusehälfte 10 vorgesehen, wobei selbstverständlich auch insgesamt nur ein Infrarotfenster vorgesehen sein kann. Eine weitere Griffleiste 26 ist parallel zur Griffleiste 22 am gegenüberliegenden Endbereich der unteren Gehäusehälfte 10 angeordnet. Derartige Griffleisten können selbstverständlich in variabler Anordnung und Ausgestaltung entsprechend den jeweiligen Bedürfnissen angeordnet sein.

Im Innern des Gehäuses sind gemäß Fig. 1 die für einen Computer erforderlichen elektronischen Bauteile und Komponenten auf Platinen 28, 29 angeordnet, von denen zwei schematisch dargestellt sind. Bei den zur Vereinfachung nicht dargestellten Bauelementen und Baugruppen handelt es sich im wesentlichen um eine zentrale Prozessoreinrichtung (CPU), um einen Arbeitsspeicher (RAM), um einen Festwertspeicher (ROM) und um Eingabe-/Ausgabe-Einrichtungen. Die Platinen 28, 29 sind an einstückig mit den Gehäusehälften 10, 11 verbundenen Haltevorsprüngen 30 fixiert.

An einer Schmalseite der unteren Gehäusehälfte 10 sind zwei in der Längsrichtung dieser Gehäusehälfte 10 hintereinander angeordnete, klappenartige Deckel 31, 32 angeordnet, die zum dichtenden Verschließen entsprechender Gehäuseöffnungen 33 dienen. Diese Deckel 31, 32 besitzen einen im wesentlichen U- bzw. L-förmigen Querschnitt, wobei jeweils ein Schenkel 34 in der Ebene der die Flachseite der unteren Gehäusehälfte 10 bildenden Gehäusewandung 35 angeordnet ist (im geschlossenen Zustand der Deckel 31, 32) und ein anderer, im wesentlichen senkrecht dazu angeordneter Schenkel 36 in der Ebene der Schmalseite der unteren Gehäusehälfte 10 angeordnet ist. Dabei sind die Deckel 31, 32 so in der Wandung der unteren Gehäusehälfte 10 versenkt, daß kontinuierliche, stufenlose Übergänge vorliegen.

Der zu seinem freien Ende hin in Richtung des Gehäuses abgestufte Schenkel 36 der Deckel 31, 32 ist über ein Filmscharnier 37 einstückig mit einem leistenartigen Haltebereich 38 verbunden, der zur Fixierung des Filmscharniers 37 in eine schlitzartige Halteausnehmung 39 der anderen Gehäusehälfte 11 einsteckbar und dort mittels einer Rastnase 40 verrastbar ist. Somit sind die Deckel 31, 32 schwenkbar an der oberen Gehäusehälfte 11 angeordnet. An den die Gehäuseöffnung 33 umgreifenden Dichtflächen der Deckel 31, 32 sind diese mit einer Dichtung 41 versehen.

Zur Fixierung der Deckel 31, 32 in ihren Schließstellungen dienen zwei Schließschieber 42, 43. Diese sind in entsprechenden Führungsausnehmungen 44 der oberen Gehäusehälfte 11 so verschiebbar angeordnet, daß sie im vollständig eingeschobenen Zustand die Deckel 31, 32 bzw. deren Schenkel 36 übergreifen und dadurch die Deckel 31, 32 gegen die Dichtfläche pressen. Diese Schließschieber 42, 43 weisen ebenfalls einen im wesentlichen L-förmigen Querschnitt auf und sind ebenfalls in entsprechender Weise im eingeschobenen Zustand versenkt mit stufenlosen Übergängen in der oberen Gehäusehälfte 11 angeordnet. Zur Erleichterung des Öffnungsvorgangs sind die in Kontakt mit den Deckeln 31, 32 stehenden Endbereiche der Schließschieber 42, 43 mit Greifvorsprüngen 45 versehen. In Fig. 1 sind die Schließschieber 42, 43 und Deckel 31, 32 zusätzlich im geöffneten Zustand strichpunktiert dargestellt.

Durch die Gehäuseöffnungen 33 können bei geöffneten Deckeln 31, 32 steckkartenartige Funktionsmodule 46, 47 in entsprechende schlitzartige Steckplätze eingesteckt bzw. aus diesen herausgezogen werden. Diese Funktionsmodule 46, 47 dienen zur Erweiterung und Veränderung der Hardware und Software des Computers in variabler Weise. Es handelt sich dabei beispielsweise um Funkmodule, Programmspeichermodule, Arbeitsspeichermodule, Seriell-Parallel-Wandlermodule, Netzmodule, Modemmodule und/oder Netzwerkmodule. Beispielsweise enthält der zentrale Programmspeicher im Gehäuse lediglich ein Grundprogramm, während die jeweiligen Anwendungsprogramme mittels Programmspeichermodulen eingesetzt werden. Weiterhin kann durch Arbeitsspeichermodule der Arbeitsspeicher vergrößert werden. Über Funkmodule können Daten drahtlos per Funk übertragen werden. Netzwerkmodule und Modemmodule dienen zum Aus- und Einlesen von Daten, allerdings in diesem Falle bei geöffneten Deckeln 31, 32, sofern Verbindungsleitungen erforderlich sind. Auf diese Weise kann die Hardware-Konfiguration des Computers durch einfaches Umstecken bzw. Einstecken von Funktionsmodulen erweitert und verändert werden. Eine Programmänderung kann durch einfaches Umstecken von Programmspeichermodulen erfolgen.

Im Ausführungsbeispiel sind in jeder Gehäuseöffnung 33 zwei Steckplätze für zwei Funktionsmodule vorgesehen, so daß insgesamt vier Funktionsmodule einsetzbar sind. Selbstverständlich kann die Zahl von Funktionsmodulen pro Gehäuseöffnung und die Zahl der Gehäuseöffnungen variiert werden. Es ist auch möglich, verschieden dimensionierte Funktionsmodule vorzusehen, so daß beispielsweise in einer Gehäuseöffnung zwei schmale oder ein dickeres Funktionsmodul eingesetzt werden können.

## Patentansprüche

1. Tragbarer Computer mit einem ein Display und einem, eine Bedienungstastatur aufweisenden, wassergeschützten oder wasserdichten Gehäuse, das eine zentrale Prozessoreinrichtung (CPU), wenigstens einen Daten- und Programmspeicher und eine Versorgungsbatterie enthält, **dadurch gekennzeichnet, daß** wenigstens ein Steckplatz für von außen durch wenigstens eine Öffnung (33) in das Gehäuse (10, 11) einsteckbare Funktionsmodule (46, 47) und ein die Öffnung (33) dichtend verschließender Deckel (31, 32) vorgesehen sind, wobei der wenigstens eine Steckplatz zum Anschluß des jeweils eingesteckten Funktionsmoduls (46, 47) an die zentrale Prozessoreinrichtung mit dieser elektrisch verbunden ist.

2. Computer nach Anspruch 1, **dadurch gekennzeichnet, daß** die Funktionsmodule (46, 47) als Steckkarten und der wenigstens eine Steckplatz als Steckschlitz ausgebildet sind.

3. Computer nach Anspruch 1 oder 2, **dadurch gekennzeichnet, daß** in der wenigstens einen Öffnung (33) mehrere Steckplätze vorgesehen sind.

4. Computer nach Anspruch 3, **dadurch gekennzeichnet, daß** einen Steckplatz belegende Funktionsmodule (46, 47) und zwei Steckplätze belegende Funktionsmodule.vorgesehen sind.

5. Computer nach einem der vorhergehenden Ansprüche, **dadurch gekennzeichnet, daß** Funkmodule, Programmspeichermodule, Arbeitsspeichermodule, Seriell-Parallel-Wandlermodule, Netzmodule, Modemmodule und/oder Netzwerkmodule als Funktionsmodule (46, 47) vorgesehen sind.

6. Computer nach einem der vorhergehenden Ansprüche, **dadurch gekennzeichnet, daß** das Gehäuse (10, 11) als Flachgehäuse ausgebildet ist und die wenigstens eine Öffnung (33) an einer Schmalseite oder einem Kantenbereich einer Schmalseite des Gehäuses angeordnet ist.

7. Computer nach einem der vorhergehenden Ansprüche, **dadurch gekennzeichnet, daß** der Deckel (31, 32) mittels eines Scharniers (37) schwenkbar am Gehäuse (10, 11) angeordnet ist.

8. Computer nach Anspruch 7, **dadurch gekennzeichnet, daß** der Deckel (31, 32) über das Scharnier (37) mit einem in eine Halteausnehmung (39) des Gehäuses einsteckbaren und verrastbaren Haltebereich (38) verbunden ist.

9. Computer nach Anspruch 8, **dadurch gekennzeichnet, daß** der Deckel (31, 32), das als Filmscharnier ausgebildete Scharnier (37) und der Halteberereich (38) einstückig ausgebildet sind.

10. Computer nach einem der Ansprüche 7 bis 9, **dadurch gekennzeichnet, daß** ein den Deckel (31, 32) in der dichtenden Schließstellung haltender Schließschieber (42, 43) vorgesehen ist.

11. Computer nach Anspruch 10, **dadurch gekennzeichnet, daß** der Schließschieber (42, 43) in einer Führungsausnehmung (44) des Gehäuses (10, 11) geführt ist und in der Schließstellung den Deckel (31, 32) wenigstens teilweise übergreift und dichtend an das Gehäuse anpreßt.

12. Computer nach Anspruch 10 oder 11, **dadurch gekennzeichnet, daß** der Deckel (31, 32) und der Schließschieber (42, 43) so versenkt angeordnet sind, daß sie zusammen mit den angrenzenden Gehäusewandungen (35) eine kontinuierliche, stufenlose Außenfläche bilden.

13. Computer nach einem der vorhergehenden Ansprüche, **dadurch gekennzeichnet, daß** die Bedienungstastatur (16) und das Display (15) an einer der Flachseiten des Gehäuses (11) angeordnet sind.

14. Computer nach Anspruch 14, **dadurch gekennzeichnet, daß** die Bedienungstastatur (16) Berührungstasten aufweist.

15. Computer nach einem der vorhergehenden Ansprüche, **dadurch gekennzeichnet, daß** das Gehäuse aus zwei zusammenschraubbaren Gehäuseteilen (10, 11) besteht.

## Claims

1. Portable computer with a splash-proof or waterproof case, with a display and an operator keyboard, containing a central processor unit (CPU), one or more data and program memories, and a storage battery, **characterised in that** there are provided one or more slot locations for function modules (46, 47) which may be inserted through one or more openings (33) in the case (10, 11), and a cover (31, 32) sealing the opening (33), wherein the slot location or locations is or are electrically connected to the central processor unit for connection to the latter of the respectively inserted function module (46, 47).

2. Computer according to claim 1, **characterised in that** the function modules (46, 47) are in the form of plug-in cards, and the slot location or locations are in the form of card slots.

3. Computer according to claim 1 or 2, **characterised in that** several slot locations are provided in the opening (33) or openings.

4. Computer according to claim 3, **characterised in that** function modules (46, 47) occupying one slot location and function modules occupying two slot locations are provided.

5. Computer according to any of the preceding claims, **characterised in that** radio modules, program memory modules, main memory modules, series-parallel converter modules, power modules, modem modules and/or network modules are provided as function modules (46, 47).

6. Computer according to any of the preceding claims, **characterised in that** the case (10, 11) is designed as a flat case and the opening (33) or openings is or are located on a narrow side or an edge area of a narrow side of the case.

7. Computer according to any of the preceding claims, **characterised in that** the cover (31, 32) is pivotably fitted to the case (10, 11) by means of a hinge (37).

8. Computer according to claim 7, **characterised in that** the cover (31, 32) is connected via the hinge (37) to a holding area (38) which may be inserted and locked in a holding recess (39) of the case.

9. Computer according to claim 8, **characterised in that** the cover (31, 32), the hinge (37) in the form of a film hinge, and the holding area (38) are designed in one piece.

10. Computer according to any of claims 7 to 9, **characterised in that** there is provided a closing slide (42, 43) which holds the cover (31, 32) in the sealing closed position.

11. Computer according to claim 10, **characterised in that** the closing slide (42, 43) is guided in a guide recess (44) of the case (10, 11), and in the closed position overlaps the cover (31, 32) at least partially and makes sealing contact with the case.

12. Computer according to claim 10 or 11, **characterised in that** the cover (31, 32) and the closing slide (42, 43) are so recessed that, together with the adjacent case sides (35), they form continuous, stepless outer surface.

13. Computer according to any of the preceding claims, **characterised in that** the operator keyboard (16) and the display (15) are located on one of the flat sides of the case (11).

14. Computer according to claim 14, **characterised in that** the operator keyboard (16) has touch keys.

15. Computer according to any of the preceding claims, **characterised in that** the case is comprised of two case sections (10, 11) which may be screwed together.

## Revendications

1. Ordinateur portable avec un châssis protégé contre l'eau ou étanche à l'eau, comportant un écran et un clavier de commande et qui contient une unité centrale à processeur (CPU), au moins une mémoire de données de programmes et une batterie d'alimentation, **caractérisé en ce que** sont prévus au moins un emplacement d'enfichage pour des modules fonctionnels (46, 47) à enficher dans le châssis (10, 11) de l'extérieur, à travers au moins une ouverture (33), ainsi qu'un couvercle (31, 32) fermant l'ouverture (33) de manière étanche, et le ou les emplacements d'enfichage pour le raccordement du module fonctionnel (46, 47) enfiché respectif à l'unité centrale à processeur, étant reliés électriquement à celle-ci.

2. Ordinateur selon la revendication 1, **caractérisé en ce que** les modules fonctionnels (46, 47) sont réalisés en tant que cartes à enficher et le ou les emplacements d'enfichage en tant que fentes d'enfichage.

3. Ordinateur selon la revendication 1 ou 2, **caractérisé en ce que** dans la ou les ouvertures (33) sont prévus plusieurs emplacements d'enfichage.

4. Ordinateur selon la revendication 3, **caractérisé en ce que** sont prévus des modules fonctionnels (46, 47) occupant un emplacement d'enfichage et des modules fonctionnels occupant deux emplacements d'enfichage.

5. Ordinateur selon l'une des revendications précédentes, **caractérisé en ce que** sont prévus des modules radio, des modules de mémoire de programmes, des modules de mémoire de travail, des modules convertisseurs série-parallèle, des modules secteur, des modules de mode et/ou des modules de réseau en tant que modules fonctionnels (46, 47).

6. Ordinateur selon l'une des revendications précédentes, **caractérisé en ce que** le châssis (10, 11) est réalisé en tant que châssis plat et la ou les ouvertures (33) sont disposées sur un petit côté ou une zone de bordure d'un petit côté du châssis.

7. Ordinateur selon l'une des revendications précédentes, **caractérisé en ce que** le couvercle (31, 32) est disposé pivotant, au moyen d'une charnière (37), sur le châssis (10, 11).

8. Ordinateur selon la revendication 7, **caractérisé en ce que** le couvercle (31, 32) est relié, par la charnière (37), à une zone de retenue (38) qui peut être enfichée et accrochée dans un évidement de retenue (39) du châssis.

9. Ordinateur selon la revendication 8, **caractérisé en ce que** le couvercle (31, 32), la charnière (37) conformée en charnière-film et la zone de retenue (38) sont réalisés d'un seul tenant.

10. Ordinateur selon l'une des revendications 7 à 9, **caractérisé en ce qu'**il est prévu un coulisseau de fermeture (42, 43) qui maintient le couvercle (31, 32) dans la position fermée étanche.

11. Ordinateur selon la revendication 10, **caractérisé en ce que** le coulisseau de fermeture (42, 43) est guidé dans un évidement de guidage (44) du châssis (10, 11) et, en position fermée, passe au moins en partie sur le couvercle (31, 32) et le presse de manière étanche contre le châssis.

12. Ordinateur selon la revendication 10 ou 11, **caractérisé en ce que** le couvercle (31, 32) et le coulisseau de fermeture (42, 43) sont disposés encastrés de manière à former, avec les parois (35) adjacentes du châssis, une surface extérieure continue, sans gradin.

13. Ordinateur selon l'une des revendications précédentes, **caractérisé en ce que** le clavier de commande (16) et l'écran (15) sont disposés sur l'une des faces plates du châssis (11).

14. Ordinateur selon la revendication 13, **caractérisé en ce que** le clavier de commande (16) comporte des touches à effleurement.

15. Ordinateur selon l'une des revendications précédentes, **caractérisé en ce que** le châssis est constitué de deux parties (10, 11) pouvant être vissées ensemble.
